Europäisches Patentamt

European Patent Office

Office européen des brevets

(19)

(11) EP 0 417 861 B1

(12) EUROPEAN PATENT SPECIFICATION

(45) Date of publication and mention
of the grant of the patent:
**10.06.1998 Bulletin 1998/24**

(51) Int Cl.[6]: **G06F 7/544**, G06F 17/10,
H03H 17/02

(21) Application number: 90202406.6

(22) Date of filing: **10.09.1990**

(54) **Dynamically reconfigurable signal processor and processor arrangement**

Dynamisch rekonfigurierbarer Signalprozessor und Prozessoranordnung

Procésseur de signal reconfigurable dynamiquement et montage du procésseur

(84) Designated Contracting States:
**DE FR GB**

(30) Priority: **12.09.1989 US 406203**

(43) Date of publication of application:
**20.03.1991 Bulletin 1991/12**

(73) Proprietor: **Philips Electronics N.V.
5621 BA Eindhoven (NL)**

(72) Inventors:
• **Johnson, Brian
NL-5656 AA Eindhoven (NL)**
• **Basile, Carlo
NL-5656 AA Eindhoven (NL)**
• **Miron, Amihai
NL-5656 AA Eindhoven (NL)**
• **Weste, Neil
NL-5656 AA Eindhoven (NL)**
• **Terman, Christopher
NL-5656 AA Eindhoven (NL)**
• **Leonard, Judson
NL-5656 AA Eindhoven (NL)**

(74) Representative: **de Haas, Laurens Johan et al
INTERNATIONAAL OCTROOIBUREAU B.V.,
Prof. Holstlaan 6
5656 AA Eindhoven (NL)**

(56) References cited:
**EP-A- 0 135 024          US-A- 4 694 416**

• **IBM TECHNICAL DISCLOSURE BULLETIN. vol.
16, no. 12, May 1974, NEW YORK US pages 3942
- 3943; THIRION: 'MULTIPLEX DIGITAL
FILTERING TECHNIQUE'**
• **PATENT ABSTRACTS OF JAPAN vol. 13, no. 200
(P-869)12 May 1989 & JP-A-1 021 530
(MITSUBISHI ELECTRIC)**

## Description

The invention relates to a digital signal processor comprising

- a scalar product multiplier for determining a sum of products of a succession of multiplicants with respective coefficients,
- a succession of transfer sections, each having a transfer output coupled to a successive multiplicant input of the scalar product multiplier, the transfer sections each having a data input, data retention means, and lateral transfer coupling means to adjacent transfer sections in the succession, for transferring data in successive clock cycles,
- transfer control means for controlling in at least one of the transfer sections a transfer path via which data is transferred from the data input to one of the corresponding multplicant inputs.

The invention also relates to an apparatus for decoding time multiplexed video signals comprising a plurality of digital filters.

A digital signal processor according to the preamble is known from US patent number 4,694,416.

A digital signal processor for determining the scalar product of a set of coefficients "$h_i$" with multiplicants "$s_i$", i.e. for determining "p" according to

$$p = \sum_{i=1}^{n} h_i s_i$$

is also known from "A 1-Gops CMOS Programmable Video Signal Processor", T. Yamazaki et al, International Solid State Circuits Conference 1989 page 164-165 and 326 (Yamazaki). Yamazaki teaches an architecture in which, by setting various switches, the transfer sections can be reconfigured. By changing the paths from the data inputs to the multiplicant inputs in this way, the digital signal processor can be made to perform different processing functions.

When the data inputs of all sections are fed straight to the multiplicant inputs, one gets a scalar product function. When only one data input is fed straight to the multiplicant inputs, and data from this input is also transferred on successive clock cycles to an adjacent transfer section, from where it is led to the multiplicant input and transferred to a next adjacent section and so on, the DSP performs a linear FIR (Finite Impulse Response) filtering:

$$p_m = \sum_{i=1}^{n} s_{m-i} h_i$$

where "$s_i$" ($i = 1, 2, ...$) are successive data signal values in time, "$h_i$" are coefficients and "$p_m$" are successive outputs of the scalar product multiplier.

Another useful reconfiguration concerns symmetric FIR filters, where the coefficients "h" are symmetric around a central point

$$K + \frac{1}{2}, \text{ i.e. } h_{K+1-i} = h_{K+i} \ (i=1,...,K)$$

In this case the cited publication teaches "folding" of the data path, i.e. transferring data forward from one section to another up to a Kth "foldback", section, and from there backwards along the sections. The data values that enter the transfer sections in the forward and backward directions are added in the section and applied to the multiplicant input, making for an output

$$p_m = \sum_{i=1}^{K} (S_{m-i} + S_{m+i-2K+1}) h_i$$

rearranging the sum for the second term by the substitution of i' = 2K-i, +1, it follows that

$$p_m = \sum_{i=1}^{K} S_{m-i} h_i + \sum_{i'=K+1}^{K} S_{m-i'} h_{2K-i'+1}$$

which in case of symmetric coefficients $h_{K+1-i} = h_{K+i}$ reduces to

$$p_m = \sum_{i=1}^{K} S_{m-i} h_i + \sum_{i'=K+1}^{K} S_{m-i'} h_i$$

i.e. the output of a FIR filter with twice as many multiplicants as actually used in hardware, a result obtained simply by reconfiguring the path of the data through the transfer sections.

Other signal processing functions can also be realized by reconfiguring the transfer sections.

Yamazaki does not sow any means for reconfiguring the signal processor. US 4,694,416 for shows transfer control means that primarily control selection of one of a number of busses as input to a multiplier/adder. These transfer control means can also select the output of an adjacent multiplier/adder as input to the multiplier adders, but not of any input data being transported through a succession of transfer sections. These transfer control means are programmed by reconfiguration data which is loaded prior to any processing of data by means of a shift register which shifts configuration data via control registers of al of the transfer sections.

In many signal processing applications, for example in MAC (Multiple Analog Component) television receivers, several processing functions of the type discussed above must be performed on signals. If speed is not critical, this can be done with one reconfigurable digital signal processor, by time slot sharing, where first one signal is processed and later another in the same signal processor reconfigured appropriately. Because the transfer control means of the prior art provide only for loading of configuration data by a shift operation prior to any processing, sharing becomes impossible in high speed applications, since too much time is required for each operation and for reconfiguration and initialization of the data in the signal processor.

Inter alia, it is an object of the invention to facilitate the sharing of digital signal processors by different signal processing operations at the same time, and by reducing the time lost in reconfiguration and initialization of the data in the signal processor.

For this purpose, the invention provides a digital signal processor which is characterized in that the transfer control means are arranged to be able to alter the transfer path in said successive clock cycles under control of a program independently for each transfer section, the transfer sections containing a register for maintaining data at the multiplicant input while initializing data for another processing function is transferred through the transfer section.

For normal filter operations such transfer control means have little purpose, because most of the transfer sections perform the same function, and this function is only infrequently altered, it at all. Their advantageous effect only appears when different functions have to be performed. By such transfer control means, it is for example possible to initialize data in parts of the signal processor while other parts are still handling the tail end processing of a previous function. This reduces the amount of processing time lost in initialization, which is increasingly relevant as function alterations become more frequent. Also filters that need different transfer paths simultaneously can be processed in different parts of one processor, instead of requiring different processors.

An embodiment of the invention is characterized in that the transfer to the forward register and the side register is under control of the transfer control means. The side registers can be used in this way to maintain one signal at the multiplicant input while initializing data for another processing function is already transferred through a section.

An embodiment of the invention is characterized in that the transfer to the backward register is under control of the transfer control means.

Another embodiment of the invention is characterized in that each transfer section comprises a cross coupling, for transferring data from the forward data transfer chain to the backward data transfer chain, transfer along the cross coupling being under control of the transfer control means.

A further embodiment of the invention is characterized in that the cross coupling, under control of the transfer control means, is either directly from the forward data transfer chain or via a centre register whose transfer is controlled by the transfer control means. Amongst others, the centre register can be used to hold the tail end of a previous function while a new function is being initialized.

Another embodiment of the invention is characterized in that the respective coefficients are input to the scalar product multiplier from a coefficient storage means, under control of a coefficient selection program controlling the selection of coefficients on successive clock cycles independently for each multiplicant. This enables the signal processor to switch filter characteristics without losing time available for signal processing.

BRIEF DESCRIPTION OF THE DRAWINGS

Other objects, features and advantages of the present invention will become more fully apparent from the following detailed description of the preferred embodiments, the appended claims and the accompanying drawings in which:

Figure 1 is a block diagram of one embodiment of a DSP comprising the invention.

Figure 2 is a block diagram of a tap section of the DSP shown in Figure 1.

Figure 2a is a block diagram of the controller of the DSP shown in Figure 1.

Figure 2b is a memory map of the RAM block of the controller shown in Figure 2a.

Figure 3 is a block diagram of one embodiment of a MAC decoder comprising the invention.

Figure 4 is a block diagram of the processor arrangement of Figure 3.

Figure 5a is a block diagram of the line buffer portion of the processor arrangement of Figure 4.

Figure 5b is a more detailed block diagram of a portion of the line buffer shown in Figure 5a.

DETAILED DESCRIPTION OF A PREFERRED EMBODIMENT OF THE INVENTION

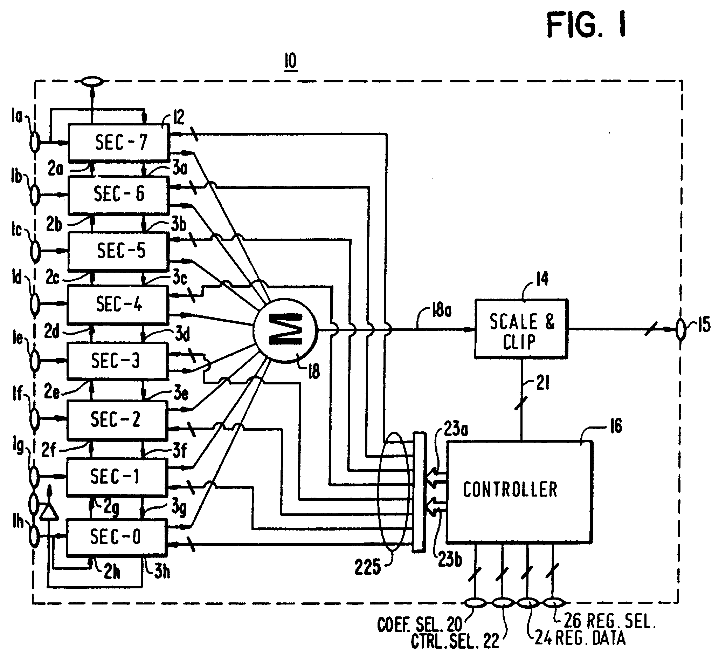

The invention comprises a dynamically configurable digital signal processor (DSP) and a processing arrangement comprising at least one DSP. The embodiments illustrated herein by way of example in Figures 1-5b describe embodiments of a DSP and a MAC decoder comprising an arrangement of DSPs, each of which performs a variety of signal processing functions which can change dynamically with the time multiplexed signal being processed.

Coefficients and control words are written into memory means within the DSP(s) either initially (for example at power up) or periodically (for example during the vertical interval of a MAC type television signal).

During the processing of a signal by the DSP, address locations in the memory means are accessed with each clock cycle or group of cycles. Each address location contains either coefficients or control words which are provided to respective tap sections. In this manner, the function provided by, and characteristics of, the DSP can change dynamically as often as each clock cycle. This will also be referred to herein as changing the characteristics of the DSP and/or processor arrangement "on-the-fly".

The embodiment of the DSP 10 shown in Figure 1 utilizes eight configurable tap sections having for example 10-bit-wide data paths. The tap sections will all be represented herein with reference to the tap section labelled 12. It is to be understood however that the number of tap sections and the word length and configuration of data ports, buses and memory means described herein, can be varied and still remain within the scope of the invention.

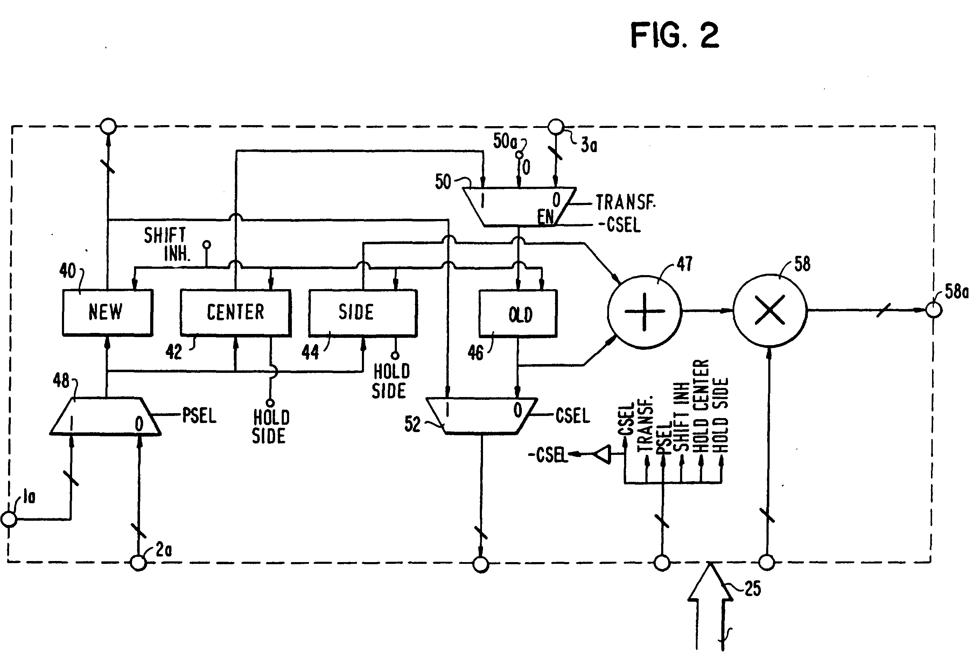

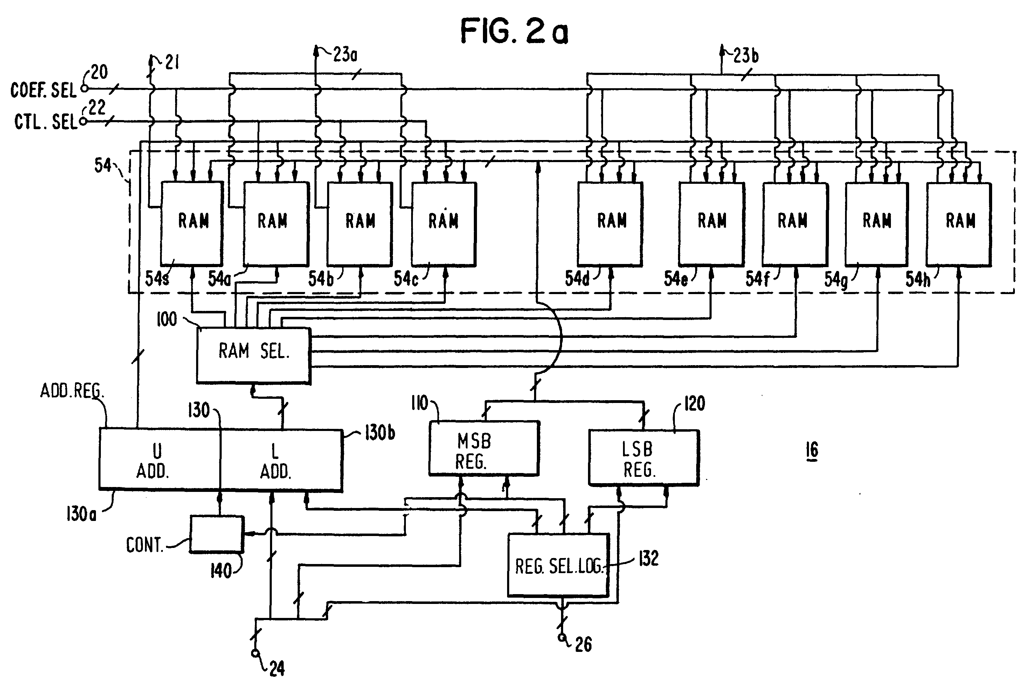

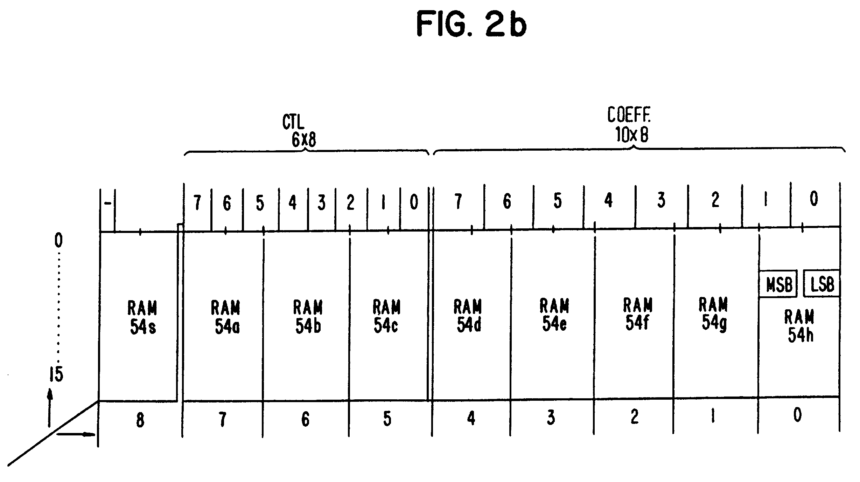

Each tap section 12 has a first data input (1a-1h), a second data input (2a-2h) coupled to the adjacent tap section below it and a third data input (3a-3h) coupled to the adjacent tap section above it. The structure of each tap section 12 is shown in greater detail in Figure 2.

As will be described in more detail below, memory means are provided in the controller 16 of DSP 10 for storing multi-bit coefficients and control words which are provided to the tap sections via bus 25. The coefficients and control words for each tap section necessary to configure the DSP 10 to perform a desired processing function are read from and provided by, the memory means, to each respective tap section, as often as every clock cycle.

By utilizing "pipelined" architecture the DSP 10 can operate at high speeds, for example at a clock rate of more than 40 MHz. With pipelined architecture, a new operation starts while other parts of the previous operation are still being performed at other locations within the circuit during the same machine cycle.

Each tap section 12 comprises four data registers 40, 42, 44 and 46 labelled "new", "center", "side" and "old" respectively, for convenience. Three multiplexers 48, 50 and 52 provide flexibility in configuring the data path within each tap section 12 and therefore throughout the DSP 10.

Figure 2a is a block diagram of the controller 16. It comprises a memory means 54 assembled for example, from nine 16 by 16 dual ports RAMs. RAMs 54a-54c are configured to store control words. These control words are provided as an output from controller 16 by bus 23a. RAMs 54a-54c together hold sixteen 48 bit words. Each 48 bit word is divided into eight 6 bit control words, each of which are directed over respective lines of bus 25 to a different tap section (sections 0 thru 7). RAMs 54d-54h are configured to store coefficients. These coefficients are provided as an output from controller 16 by bus 23b. RAMs 54d-54h hold sixteen 80 bit words. Each 80 bit word is divided into eight 10 bit coefficients, each of which is directed over respective lines of bus 25 to a different tap section (sections 0-7). One RAM 54s is configured to store sixteen 3 bit scale factors which are provided to scale & clip means 14 by bus 21. Each of the sixteen scale factors, coefficients and control words are in addressable locations in the RAM block 54. If an address location is provided to coefficient select port 20, the coefficients stored at that row location of the appropriate RAMs wil be read by the tap sections over respective lines of bus 25. If an address location is provided to control select port 22, the control words stored at that row location of the appropriate RAMs will be transferred to the tap sections over respective lines of bus 25. Similarly the scale factor stored in RAM 54s will be read by scale and clip means 14.

PROCESSING SEQUENCE

Operation of each tap section 12 is controlled by six control signals. Each of these control signals is represented by one bit of the six bit control word provided to each tap section from controller 16.

The six control signal are:

Shift-Inhibit: This signal is a hold control for all four data registers. When enabled, the data registers will be held rather than loaded with the selected input data on the next rising edge of a clock signal. It is possible to "stall" the flow of data through the DSP for the next cycle by enabling Shift-Inhibit during the current cycle. One may wish to enable Shift-Inhibit if new data samples are not available every clock cycle.

Hold-Side: This signal is a hold control for the Side data register 44 whose input is from the data stream via parallel input 1a or input from adjacent section 2a as selected by multiplexer 48, and whose output is one of the two inputs to adder 47. In normal operation, this signal is not enabled; however, by enabling Hold-Side in the cycle after the final sample of a data stream enters the data pipeline, it is possible to change data streams "on-the-fly" without having to first drain the data pipeline, and without interaction between the "old" data stream coming from old data register 46 and the "new" data stream coming from the multiplexer 48. While Hold-Side is enabled in one section of a DSP 10, elements of a "new" stream can shift throught other tap sections, but the tap section outputs behave as if the final sample of the "old" stream were replicated indefinitely. In order to efficiently utilize control memory it is possible to propagate the Hold-Side signal from tap to tap following the final sample of the "old" data stream. This will minimize the number of control words used. To do this, Hold-Side is enabled for the first tap section of a DSP 10 only and later tap sections receive delayed copies of the final sample using appropriate transfer circuitry. Propagation of the delayed copies is halted at any tap section in which Csel is enabled, and the delayed copies are cleared when Transfer is enabled.

Hold-Center: This signal is a hold control for the center data register 42 which is used when initializing a tap section or when changing data streams in conjunction with changes in the input signal to DSP 10 i.e. "on-the-fly". If the DSP 10 is to be configured to operate as a symmetric filter, the first sample value of a "new" data stream is saved in the center data register 42 as it passed through each tap section by enabling Hold-Center for each tap section of the filter on the cycle in which the first sample value of the input signal to be processed enters the tap section. On the cycle when the first data sample reaches the center tap section of the filter, all the tap sections downstream from the center section (i.e., present in the Old data registers 46 of each section) can be initialized simultaneously with their copy of the first data value by enabling Transfer for all the tap sections during that cycle. The filter now behaves as if it had been processing a constant waveform equal to the first data sample, thus avoiding any ringing, etc. due to a startup transient. This signal may be automatically propagated to later tap sections as was described previously for the Hold-Side signal. In this case Hold-Center would be enabled in the first tap section when the first "new" data sample enters the data pipeline.

Transfer: This signal is used to choose the input for old data register 46 and to clear propagated copies of Hold-Side and Hold-Center if propagation has been implemented as described above. In the normal operation of a DSP 10 configured as a symmetric filter, if Transfer is not enabled, the old data register 46 is loaded with data from the section above via input 46a. If the Transfer is enabled the old data register 46 will be loaded from the center data register 42.

Psel: This signal enables selection of a parallel data input. When enabled, input to multiplexer 48 not from the tap section below via input 2a, but rather from the parallel data input 1a. Psel would be enabled for the first tap section of a DSP 10 configured as a horizontal filter, or if this tap section is being used to provide an appropriately weighted input directly to the summing network 18.

Csel: This signal configures the tap section as a center tap for a symmetric filter. When enabled, multiplexer 50 will select the zero input 50a and the output of the old data register 46 will become zero (effectively making the contents of the side data register 44 the input to the multiplier 58). The contents of the new data register 40 will be directed to the tap section below via multiplexer 52. One would enable Csel for the center tap section of a DSP 10 configured as a symmetric horizontal filter, any tap section of a DSP 10 configured as a non-symmetric filter, or any tap section of a DSP 10 being used as part of a vertical filter. Enabling Csel in any tap section would block the automatic propagation of Hold-Side and Hold-Center if implemented as discussed above.

During the processing sequence, in each tap section of the DSP 10 the sum of the contents of side register 44 and old register 46 is obtained in adder 47 and then multiplied by a coefficient provided from controller 16. If desired, a different coefficient can be selected at each cycle. Note that the coefficient RAM address is the same for all tap sections of a DSP 10, on a given cycle, therefore all tap sections will be multiplying by their nth coefficient located at the RAM address n. In addition, the scale factor stored at that same RAM address (in RAM 54s) will be selected and provided to scale & clip means 14. If a tap section is unused or should not contribute to the sum on a given cycle, a zero coefficient should be stored at the appropriate RAM 54 address to eliminate the tap section from the sum.

The summing network 18 of the DSP embodiment shown in Figure 1, is implemented for example, as a pipelined Wallace tree that sums eight 21-bit two's complement inputs to produce a 24-bit two's complement result at outputs 18a. Note that in this embodiment data values emerging from adder 47 and coefficients are treated as 11-bit and 10-bit two's complement values respectively in multiplier 58. Thus the product output 58a of a tap section can be regarded as a 21-bit two's complement integer or fraction without any loss of precision, and the sum of eight such values can be represented as a 24-bit two's complement value. Since the computations are done using fixed point arithmetic, the binary points for all the coefficients used with a given data set must be aligned in order for the summing logic to perform as expected.

The output of the summing network 18 can be shifted left s places (scaled by $2^s$) and clipped (in scaled & clip means 14) before it appears at the output 15 of the DSP. Scale & clip means 14 consists of known circuitry for shifting and truncating data. The scale factor s used by scale & clip means 14 is in the range 0 to 7 and is read from RAM block 54 along with the coefficient as described above. After a value has been shifted, the result is clipped to minimize the damage if shifting has inadvertently produced an incorrect result through overflow or underflow.

The clipping process may be summarized as follows: The original sign bit is passed through to the output, then the next s bits are examined and discarded. If any of them differs from the sign bit, clipping forces the result to the most positive or most negative value, as shown in Table I.

TABLE I

| original sign bit | next s bit shifted out | output of clipper |
|:-:|:--|:--|
| 0 | all 0's | shifted value |
| 0 | not all 0's | most positive value (0111...111) |
| 1 | all l's | shifted value |
| 1 | not all l's | most negative value (1000...000) |

A scale factor of 0 effectively disables the shift and clip means 14 and the output of the summing network 18 appears unchanged at data output 15. The choice of scale factor presumably depends on where the binary points fall for the input data and coefficients, and what normalization is used for the coefficients.

INITIALIZATION SEQUENCE

At convenient intervals, multi-bit words representing control signals, scale factors and coefficients can be written into RAM block 54. This is referred to herein as an initialization sequence. These multi-bit words are then dynamically addressed and utilized by each tap section as described above, during the processing sequence. The multi-bit words are provided to controller 16 from a storage means, for example a ROM, CD, floppy disc etc. or they can be calculated in real time based upon input data or desired function.

Controller 16, shown in greater detail in Figure 2a, comprises a series of input ports, 20, 22, 24 and 26 and three data registers for temporarily storing the data provided at the input port 24. Controller 16 also comprises a counter 140 to increment the address register 130, and RAM select logic 100 which selects one or more of the RAMs in response to the address stored in address register 130.

The register-select input 26 identifies which one of three registers in the controller 16 is to be loaded.

Registers 110 and 120 store the control words and coefficients which are then written into RAM block 54 respectively during the initialization sequence. Writing can occur in any cycle without disrupting the operation of the DSP, provided that the data in memory locations being used in that cycle are not changed. The lower write address portion 130b of the address register 130 selects the RAM of the RAM block into which data will be written and the upper write address portion 130a selects the address location of the selected RAM.

Data is loaded at register data input port 24. Depending on the input to the register select port 26, the register select logic means 132 selects which of the three registers is to be loaded. LSB data register 120 holds the low order eight bits to be written to a RAM location selected by address register 130. MSB data register 110 holds the high order eight bits. When MSB data register 110 is selected by Register select input 26, the data stored in both the MSB and LSB data registers, 110 and 120 respectively, are written to the appropriate RAMs at the location stored in address register 130. After such a write operation takes place, the write address is incremented by counter 140. The incrementing will continue until the address register 130 is selected and provided with a new starting address, for example zero. The scale factors are also entered as data and stored in RAM 54s.

Table II illustrates the loading sequence. The write address cycle may be eliminated if the address to be written is one greater than the previous address. The LSB data cycle may be eliminated if that data is the same as on the previous

EP 0 417 861 B1

write, but MSB data must not be selected on two adjacent cycles.

### TABLE II

In the embodiment described herein, Register data port 24 is eight bits wide. The RAMs of RAM block 54 are sixteen bits wide, so it takes two cycles to perform each RAM write. Since there are eight tap sections in the DSP 10, each using ten bit coefficients, it takes five 16 bit write operations to load one set of coefficients. Similarly, it takes three 16 bit write operations to load one set of control words and finally one write operation to load a scale factor (only three bits are actually used). Figure 2b is a memory map of RAM block 54.

EXAMPLES

15-TAP SYMMETRIC FILTER

To configure DSP 10 as a fifteen tap symmetric filter, one would enable the Psel bit in tap section 0, and the Csel bit in tap section 7. This establishes tap section 0 as the input and tap section 7 as the center tap of the filter. For this example assume that new data samples arrive each clock cycle and that we will not be changing coefficients on-the-fly; this means that neither Shift-Inhibit nor Hold-Side control signals need be enabled. Hold-Center may be enabled for tap section 0 on cycles 1 through 6; control logic of the DSP will propagate it to later tap sections in which Csel is not enable on each cycle in which Shift-Inhibit is not enabled, and Transfer on cycle 7 will clear it out.

Assuming that the first data sample arrives at time 0, the following table illustrates the appropriate control signals for each cycle and the value of various registers during the cycle, as shown in Table III:

TABLE III

| cycle number | data in | Hold-Center 01234567 | Transfer 01234567 | New reg 01234567 | Old reg 01234567 | Center reg 01234567 |
|---|---|---|---|---|---|---|
| 0 | a | 00000000 | 00000000 | -------- | -------0 | -------- |
| 1 | b | 10000000 | 00000000 | a------- | -------0 | a------- |
| 2 | c | 11000000 | 00000000 | ba------ | -------0 | aa------ |
| 3 | d | 11100000 | 00000000 | cba----- | -------0 | aaa----- |
| 4 | e | 11110000 | 00000000 | dcba---- | -------0 | aaaa---- |
| 5 | f | 11111000 | 00000000 | edcba--- | -------0 | aaaaa--- |
| 6 | g | 11111100 | 00000000 | fedcba-- | -------0 | aaaaaa-- |
| 7 | h | 00000000 | 11111110 | gfedcba- | -------0 | aaaaaaa- |
| 8 | i | 00000000 | 00000000 | hgfedcba | aaaaaaa0 | hgfedcba |
| 9 | j | 00000000 | 00000000 | ihgfedcb | aaaaaaa0 | ihgfedcb |
| 10 | k | 00000000 | 00000000 | jihgfedc | aaaaaab0 | jihgfedc |
| 11 | l | 00000000 | 00000000 | kjihgfed | aaaaabc0 | kjihgfed |
| 12 | m | 00000000 | 00000000 | lkjihgfe | aaaabcd0 | lkjihgfe |

The first output appears during cycle 15.

CHANGING DATA STREAMS AND COEFFICIENTS ON-THE-FLY

Table IV illustrates the role of the side data register in changing data streams and coefficients on-the-fly. A new data stream starts through a seven tap symmetric filter on cycle 8. Notice that although the new data is being shifted through the filter in subsequent cycles, the inputs to the arithmetic elements (the side and old data registers) are still using values from the first data set, which is being extended as if the last data value were repeated at the input.

During cycle 11 the last data value of the first data set has reached the center tap and the filtering of the first data set completes (although it will still be a few cycles more before the final output value finishes travelling through the pipeline and appears at the output). On cycle 12, the filter is switched to the new data stream and the old data registers are initialized with the first value of the second data stream. This is also the cycle in which one would change the coefficient set if so desired.

TABLE IV

| cycle number | data in | Hold Center 0123 | Trnsfr 0123 | Hold Side 0123 | New 0123 | Old 0123 | Center 0123 | Side 0123 |
|---|---|---|---|---|---|---|---|---|
| 0 | a | 0000 | 0000 | 0000 | ---- | ---0 | ---- | ---- |
| 1 | b | 1000 | 0000 | 0000 | a--- | ---0 | a--- | a--- |
| 2 | c | 1100 | 0000 | 0000 | ba-- | ---0 | aa-- | ba-- |
| 3 | d | 0000 | 1110 | 0000 | cba- | ---0 | aaa- | cba- |
| 4 | e | 0000 | 0000 | 0000 | dcba | aaa0 | aaa- | dcba |
| 5 | f | 0000 | 0000 | 0000 | edcb | aaa0 | aaa- | edcb |
| 6 | g | 0000 | 0000 | 0000 | fedc | aab0 | aaa- | fedc |
| 7 | h | 0000 | 0000 | 0000 | gfed | abc0 | aaa- | gfed |
| 8 | A | 0000 | 0000 | 1000 | hgfe | cde0 | aaa- | hgfe |
| 9 | B | 1000 | 0000 | 1100 | Ahgf | cde0 | Aaa- | hhgf |
| 10 | C | 1100 | 0000 | 1110 | BAhg | def0 | AAa- | hhhg |
| 11 | D | 0000 | 1110 | 0000 | CBAh | efg0 | AAA- | hhhh |
| 12 | E | 0000 | 0000 | 0000 | DCBA | AAA0 | DCBA | DCBA |
| 13 | F | 0000 | 0000 | 0000 | EDCB | AAA0 | EDCB | EDCB |
| 14 | G | 0000 | 0000 | 0000 | FEDC | AAB0 | FEDC | FEDC |

INITIALIZING THE CONTROL AND COEFFICIENT MEMORIES

Tables V and VI illustrate the use of the register select 26 and register data 24 input ports to load the registers 100, 120, and 130 and RAM block 54. As indicated in Table VI, a "1" input to register select port 26 selects the LSB data register 120 for loading. A "2" input selects the MSB data register 110 and a "3" input selects the address register 130. Note the use of register-select = 0 as a nop to separate cycles selecting the MSB data register 110. The MSB data register 110 holds the data present at the register data port 24 when the MSB register is selected.

The control words written to tap sections 1 through 6 will be zero; tap section 0 will have Psel enabled, and tap section 7 will have Csel enabled. Two sets of 10-bit coefficients will be written for each tap section:

TABLE V

| sec | set 0 | set 1 |
|---|---|---|
| 7 | 0000000000 | 0100000000 |
| 6 | 0010000000 | 0001000000 |
| 5 | 0001000000 | 0000100000 |
| 4 | 0000100000 | 0000010000 |
| 3 | 0000010000 | 0000001000 |
| 2 | 0000001000 | 0000000100 |
| 1 | 0000000100 | 0000000010 |
| 0 | 0000000010 | 0000000001 |

TABLE VI

| cycle number | reg sel | reg data | Write Address | LSB | Comments |
|---|---|---|---|---|---|
| 0 | 3 | 00000000 | xxx | xxx | Clear Write Address |
| 1 | 1 | 00000010 | 00000000 | xxx | Setup Sec-0<7:0> in LSB reg |
| 2 | 2 | 00010000 | 00000000 | 00000010 | Write Sec-1<5:0>, Sec-0<9:8> |
| 3 | 1 | 10000000 | 00000001 | 00000010 | Setup Sec-2<3:0>, Sec-1<9:6> |
| 4 | 2 | 00000000 | 00000001 | 10000000 | Write Sec-3<1:0>, Sec-2<9:4> |
| 5 | 1 | 00000100 | 00000010 | 10000000 | Setup Sec-3<9:2> |
| 6 | 2 | 00100000 | 00000010 | 00000100 | Write Sec-4<7:0> |
| 7 | 1 | 00000000 | 00000011 | 00000100 | Setup Sec-5<5:0>, Sec-4<9:8> |
| 8 | 2 | 00000001 | 00000011 | 00000000 | Write Sec-6<3:0>, Sec-5<9:6> |
| 9 | 1 | 00001000 | 00000100 | 00000000 | Setup Sec-7<1:0>, Sec-6<9:4> |
| 10 | 2 | 00000000 | 00000100 | 00001000 | Write Sec-7<9:2> |
| 11 | 1 | 00000010 | 00000101 | 00001000 | Setup Ctl-1<1:0>, Ctl-0<5:0> |
| 12 | 2 | 00000000 | 00000101 | 00000010 | Write Ctl-2<3:0>, Ctl-1<5:2> |
| 13 | 1 | 00000000 | 00000110 | 00000010 | Setup Ctl-3<5:0>, Ctl-2<5:4> |
| 14 | 2 | 00000000 | 00000110 | 00000000 | Write Ctl-5<1:0>, Ctl-4<5:0> |
| 15 | 1 | 00000000 | 00000111 | 00000000 | Setup Ctl-6<3:0>, Ctl-5<5:2> |
| 16 | 2 | 00000100 | 00000111 | 00000000 | Write Ctl-7<5:0>, Ctl-6<5:4> |
| 17 | 0 | xxx | 00001000 | 00000000 | Nop |
| 18 | 2 | 00100000 | 10000000 | 00000000 | Write scale=1 in word 0 |
| 19 | 3 | 00010000 | 10000001 | 00000000 | Address word 1 |
| 20 | 1 | 00000001 | 00010000 | 00000001 | Setup Sec-0<7:0> in LSB reg |
| 21 | 2 | 00001000 | 00010000 | 01000010 | Write Sec-1<5:0>, Sec-0<9:8> |
| 22 | 1 | 01000000 | 00010001 | 01000010 | Setup Sec-2<3:0>, Sec-1<9:6> |
| 23 | 2 | 00000000 | 00010001 | 10000000 | Write Sec-3<1:0>, Sec-2<9:4> |
| 24 | 1 | 00000010 | 00010010 | 00000000 | Setup Sec-3<9:2> |
| 25 | 2 | 00010000 | 00010010 | 00000000 | Write Sec-4<7:0> |
| 26 | 1 | 10000000 | 00010011 | 00000000 | Setup Sec-5<5:0>, Sec-4<9:8> |
| 27 | 2 | 00000000 | 00010011 | 00000000 | Write Sec-6<3:0>, Sec-5<9:6> |
| 28 | 1 | 00000100 | 00010100 | 00000000 | Setup Sec-7<1:0>, Sec-6<9:4> |
| 29 | 2 | 00100000 | 00010100 | 00000000 | Write Sec-7<9:2> |
| 30 | 1 | 00000010 | 00010101 | 00000000 | Setup Ctl-1<1:0>, Ctl-0<5:0> |
| 31 | 2 | 00000000 | 00010101 | 00000010 | Write Ctl-2<3:0>, Ctl-1<5:2> |
| 32 | 1 | 00000000 | 00010110 | 00000010 | Setup Ctl-3<5:0>, Ctl-2<5:4> |
| 33 | 2 | 00000000 | 00010110 | 00000000 | Write Ctl-5<1:0>, Ctl-4<5:0> |
| 34 | 1 | 00000000 | 00010111 | 00000000 | Setup Ctl-6<3:0>, Ctl-5<5:2> |
| 35 | 2 | 00000100 | 00010111 | 00000000 | Write Ctl-7<5:0>, Ctl-6<5:4> |
| 36 | 0 | xxx | 00011000 | 00000000 | Nop |
| 37 | 2 | 00000000 | 00011000 | 00000000 | Write scale=0 in word 1 |

The inputs and outputs of the first and last tap sections are made available on parallel data pins so that two or more DSPs can be cascaded to form much longer symmetric or asymmetric filters.

When two or more DSPs are cascaded, an additional DSP may be used as a parallel adder to combine the partial sums output by the cascaded DSPs. Up to 19 bits of each partial sum can be included in the final sum by using two parallel input tap sections to accept disjoint fields of each partial sum, and setting the coefficients on those tap sections to compensate for their weights in the adder.

The present invention also comprises a processor arrangement which can process MAC signals such as those disclosed in copending applications U.S. Serial Nos. 077,557 filed July 24, 1987; 271,136 filed November 14, 1988 and 353,353 filed May 17, 1989, all of which are incorporated by reference herein.

In MAC transmission systems, a television signal, for example one derived from a HDTV source, is digitally processed to derive a plurality of video components, for example luminance (Y) signals, chrominance signal components (I and Q or U and V) and auxiliary signal components for example, line difference signals, all of which are further processed to provide for transmission of a wide band, high quality television signal over a lower bandwidth channel. These processed components are converted to analog signals and transmitted in time multiplexed form as the MAC signal. The HDMAC-60 signal described has a television line period which is twice the length of a conventional line period. An HDTV source signal is divided into component signals which are transmitted in such a fashion that those components necessary to derive a television signal compatible with conventional television systems can be derived from every MAC line and those components which can be combined to create an HDTV display at an HDTV receiver, are transmitted as groups of MAC lines. Appropriate memory means are then used at a decoder to store the components transmitted in time multiplexed form, so that they can be properly interpolated to form a television display.

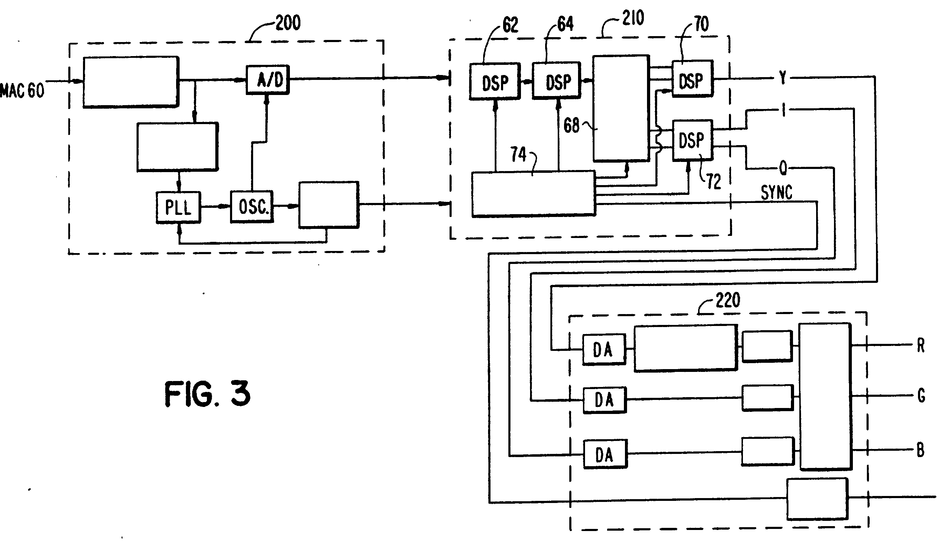

Figure 3 describes an HDMAC 60 decoder. A HDMAC signal which is derived, processed and transmitted as taught by the '557 application, is received, A/D converted and filtered to compensate for preemphasis processing which took place at the encoder, by receiving block 200. Processing block 210 comprises a plurality of DSPs which each utilize a plurality of stored coefficients and control words to operate in specific fashion for each of the signal components provided by the MAC signal. A timing signal is derived from the sync signal transmitted as part of the MAC signal. Control means 74 stores the sequence of values (addresses, coefficients, control words and scale factors) and the timing signals necessary for the initialization sequence for Dsps 62, 64, 70 and 72 as described previously. Control means 74 also consists of programmable logic, timing and memory means to store and sequentially select RAM addresses to coefficient select port 20 and control word select port 22 for the respective RAMs of each DSP, and for memory means 68, at the appropriate times relative to the incoming signal components of the MAC signal.

For some of the signal components, compression or expansion is needed during the encoding process in order to match the frequency of that component to the available channel bandwidth. This is normally done by sampling at one clock frequency and playing back at another clock frequency with the result that a number of independent clock signals are needed to restore the components at the decoder. The clock generation circuitry is consequently complex. The present invention comprises a MAC decoder in which the MAC signal is received and converted to digital signal components by receiver block 200. Each of the signal components are then provided to the processor arrangement shown in block 210, which comprises circuitry needed to compress/expand and further process the signal each components. Known systems utilize different processing paths for each component. By using the processor arrangement of dynamically configurable DSPs however, the decoder has fewer circuit paths (resulting in a circuit which is faster and smaller and easier to implement on a chip, i.e. LSI) and less complex timing requirements due to the use of a DSP configured as a resampler, as discussed below.

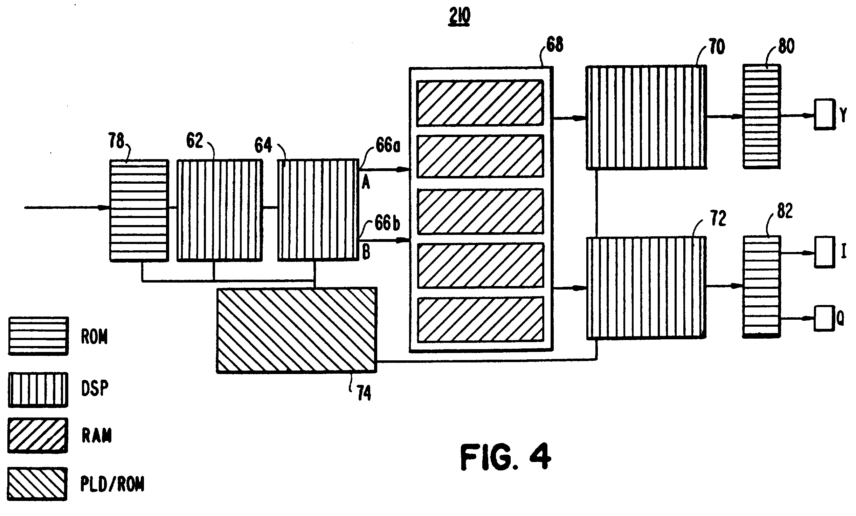

Block 210 is shown in greater detail in Figure 4. The digitized samples of the MAC signal components are processed through a gamma ROM 78 which adjusts for gamma on a sample by sample basis. The ROM 78 is configured like a "look up table" storing a number of gamma corrected values. For each sample value input to ROM 78, a corresponding gamma corrected value is used as the output from ROM 78. The signal components thus processed are then fed to a resampler 62.

Resampler 62 eliminates the complex clock circuitry needed to compensate for decompression and compression done at the encoder. The resampler 62 is a non-symmetric filter whose coefficients may change each clock cycle to provide output values equivalent to the signal component as it was originally derived from the HDTV source prior to any compression or expansion at the decoder. The DSP of the present invention is suited to accomplish this task because its coefficients can change at the necessarily rapid rate, i.e. as often as each cycle.

The resampler 62 can be, for example, an eight tap non-symmetric filter whose coefficients change with each clock cycle. If used, for example, to decode a wideband luminance signal from 1700 samples to 990 samples, it is clocked at 38 MHz and control means 64 coordinates when valid samples are present at the output of the filter during resampling (only nine output samples are valid for every sixteen input samples). Thus, this is a 9 to 16 resampler which can be used to decode a wideband luminance component as described in the '557 application.

In a similar fashion, a symmetric horizontal filter 64 is configured from a DSP which is used to filter signal components. For example, wideband luminance component Y3 is filtered to provide just the higher energy component Y3H at output 66b. Y3 is provided in an unfiltered but delayed fashion at output 66a.

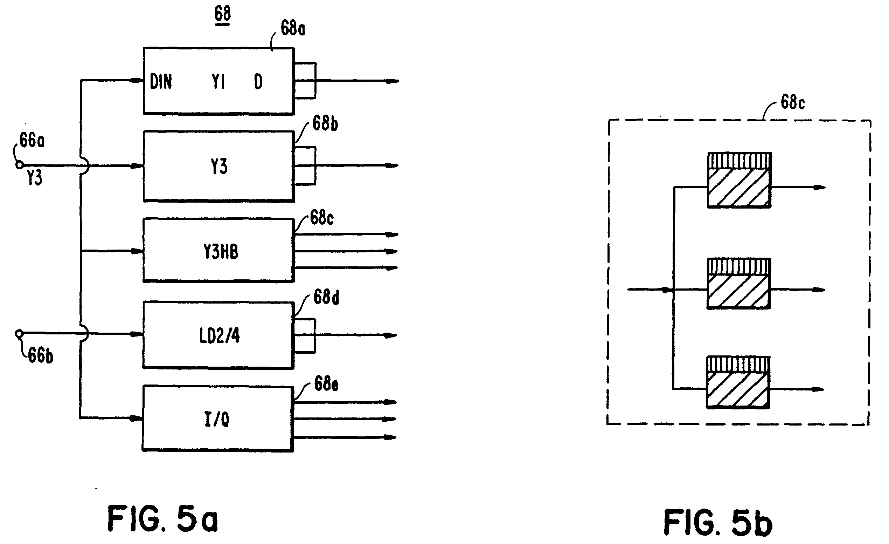

As described in the '557 application, the individual components must be delayed in time so that they can be properly recombined prior to being converted into an RGB signal in block 220. In order to do this, each must be delayed in time and properly restored to recombine the original luminance and chrominance signals from which they were derived from the HDTV source. In the present invention, this is done by taking the filtered luminance, line difference and chrominance components and the unfiltered luminance components and storing them in respective line buffers of memory means 68. The detail of the line buffers 68a-68e is shown more clearly in Figure 5a. As shown in Figure 5b each of the line buffers consists of three independently addressed memories so that one memory can hold a current line, a second memory can hold an old line, while the third memory can be written with incoming data. This provides for the most general case where two memories may be read while the other is being written. Y1 can represent a luminance component which is limited in bandwidth in accordance with the MAC channel bandwidth limitation, i.e. no compression/expansion is used at the encoder. Y3 represents a luminance signal which has been expanded to allow transmission of its wide bandwidth. Line buffers 68a-68e are provided with Y1, Y3, Y3H, line difference components LD2/4 and chrominance components I/Q respectively. It is optional that instead of storing Y3 as raw data in buffer 68b, Y3 could also be filtered to yield a Y3 component having a bandwidth comparable to Y1 (i.e. Y3L) and stored in memory means 68. In the present case, however, Y3L is derived in vertical interpolator 70 by subtracting Y3H from Y3. All of the stored and derived luminance components are interpolated into a single luminance signal Y vertical interpolator 70. In this example, the vertical interpolator 70 is a DSP configured as a five tap symmetric filter to filter the LD2/4 components and five parallel input ports of the DSP are used to vertically interpolate the Y1, Y3, Y3H and the filtered LD2/4 signals. Similarly, the chrominance components I and Q are provided by line buffer 68e to I/Q vertical interpolator 72. The sequence into the I/Q vertical interpolator is I Q I X where X is a "don't care" signal and is used for both signals in a time multiplexed fashion.

The Y portion of the restored television signal passes from Y interpolator 70 through ramping ROM 80. Similarly the I/Q passes from I/Q interpolator 72 through ramping ROM 82. These components are then demultiplexed.

Like the Gamma ROM 78, ramping ROMs 80 and 82 are configured as "look up tables" which output ramped values in place of input samples. They ramp the data up to and down from initial or final values (for example, blanking level) on a line to prevent transients in later analog stages for example, HDNTSC encoders, RGB monitors, etc.

## Claims

1. Digital signal processor comprising

   - a scalar product multiplier (18, 48) for determining a sum of products of a succession of multiplicants with respective coefficients,
   - a succession of transfer sections (12), each having a transfer output coupled to a successive multiplicant input of the scalar product multiplier, the transfer sections each having a data input (1a), data retention means (40, 42, 44, 46), and lateral transfer coupling means (2a, 3a) to adjacent transfer sections in the succession, for transferring data in successive clock cycles,
   - transfer control means (16) for controlling in at least one of the transfer sections (12) a transfer path via which data is transferred from the data input to one of the corresponding multplicant inputs,

   characterized, in that the transfer control means (16) are arranged to be able to alter the transfer path in said successive clock cycles under control of a program independently for each transfer section (12), the transfer sections (12) containing a side register (44) for maintaining data at the multiplicant input while initializing data for another processing function is transferred through the transfer section (12).

2. Digital signal processor as claimed in Claim 1, wherein each transfer section (12) comprises a forward register (40) for data retention coupled to the forward registers (40) of adjacent transfer sections (12), forming a forward data transfer chain in a forward direction along the succession of transfer sections (12), said side register being (44) coupled between the forward data transfer chain and the transfer output, the transfer to the forward register (40) and the side register (44) being under control of the transfer control means (16).

3. Digital signal processor as claimed in Claim 2, each transfer section (12) comprising a backward register (46) coupled to the backward register (46) at adjacent transfer sections (12), forming a backward data transfer chain in a direction opposite to the forward data transfer chain, data from the backwards data transfer chain with data from the forward data transfer chain being supplied together to an adder (47) whose output is coupled to the transfer output, the transfer to the backward register (46) being under control of the transfer control means (16).

4. Digital signal processor as claimed in Claim 3, characterized in that each transfer section (12) comprises a cross coupling (42, 52), for transferring data from the forward data transfer chain to the backward data transfer chain, transfer along the cross coupling being under control of the transfer control means (16).

5. Digital signal processor as claimed in Claim 4, characterized in that the cross coupling (42, 52), under control of the transfer control means (16), is either directly from the forward data transfer chain or via a center register (42) whose transfer is controlled by the transfer control means (16).

6. Digital signal processor as claimed in any one of Claim 1 to 5, characterized in that the respective coefficients are input to the scalar product multiplier from a coefficient storage means (54), under control of a coefficient selection program controlling the selection of coefficients on successive clock cycles independently for each multiplicant.

7. An apparatus for decoding time multiplexed video signals comprising a plurality of digital filters, characterized in that each of said filters comprises a digital signal processor as claimed in any one of the Claims 1 to 6.

**Patentansprüche**

1. Digitaler Signalprozessor, der folgendes umfaßt:

   - eine Skalarprodukt-Multipliziereinheit (18, 48) zum Bestimmen einer Summe von Produkten einer Folge von Multiplikanden mit entsprechenden Koeffizienten,
   - eine Folge von Transferbereichen (12), die jeweils einen mit einem folgenden Multiplikandeneingang der Skalarprodukt-Multipliziereinheit verbundenen Transferausgang aufweist, wobei die Transferbereiche jeweils einen Dateneingang (1a), Datenspeichermittel (40, 42, 44, 46) und seitliche Transferkopplungsmittel (2a, 3a) zu benachbarten Transferbereichen in der Folge besitzen, zum Übertragen von Daten in aufeinanderfolgenden Taktzyklen,
   - Transfersteuermittel (16) zum Steuern in mindestens einem Transferbereich (12) eines Transferpfades, über den Daten vom Dateneingang zu einem der entsprechenden Multiplikandeneingänge übertragen werden,

   dadurch gekennzeichnet, daß die Transfersteuermittel (16) so ausgelegt sind, daß sie den Transferpfad in den genannten aufeinanderfolgenden Taktzyklen programmgesteuert unabhängig für jeden Transferbereich (12) verändern können, wobei die Transferbereiche (12) ein Seitenregister (44) zum Aufrechterhalten von Daten am Multiplikandeneingang enthalten, während die Daten für eine andere Verarbeitungsfunktion durch den Transferbereich (12) übertragen werden.

2. Digitaler Signalprozessor nach Anspruch 1, wobei jeder Transferbereich 1 (12) ein Vorwärtsregister (40) zur Datenspeicherung gekoppelt mit den Vorwärtsregistern (40) der benachbarten Transferbereiche (12) enthält, die eine Vorwärtsdatentransferkette in Vorwärtsrichtung durch die Folge von Transferbereichen (12) bilden, wobei das genannte Seitenregister (44) zwischen die Vorwärtsdatentransferkette und den Transferausgang geschaltet ist und der Transfer zum Vorwärts- (40) und Seitenregister (44) von den Transfersteuermitteln (16) gesteuert wird.

3. Digitaler Signalprozessor nach Anspruch 2, wobei jeder Transferbereich (12) ein Rückwärtsregister (46) gekoppelt mit dem Rückwärtsregister (46) benachbarter Transferbereiche (12) enthält, die eine Rückwärtsdatentransferkette in einer der Vorwärtsdatentransferkette entgegengesetzten Richtung bilden, wobei die Daten von der Rückwärtsdatentransferkette mit den Daten der Vorwärtsdatentransferkette zusammen einer Addiereinheit (47) zugeführt werden, deren Ausgang mit dem Transferausgang verbunden ist, und wobei der Transfer zum Rückwärtsregister (46) von den Transfersteuermitteln (16) gesteuert wird.

4. Digitaler Signalprozessor nach Anspruch 3, dadurch gekennzeichnet, daß jeder Transferbereich (12) eine Kreuzkopplung (42, 52) zum Übertragen von Daten von der Vorwärtsdatentransferkette zur Rückwärtsdatentransferkette umfaßt, wobei der Transfer über die Kreuzkopplung von den Transfersteuermitteln (16) gesteuert wird.

5. Digitaler Signalprozessor nach Anspruch 4, dadurch gekennzeichnet, daß die von den Transfersteuermitteln (16) gesteuerte Kreuzkopplung (42, 52) entweder direkt von der Vorwärtsdatentransferkette oder über ein Zentralregister (42) erfolgt, dessen Transfer von den Transfersteuermitteln (16) gesteuert wird.

6. Digitaler Signalprozessor nach einem der Ansprüche 1 bis 5, dadurch gekennzeichnet, daß die entsprechenden Koeffizienten der Skalarprodukt-Multipliziereinheit von Koeffizienten-Speichermitteln (54) zugeführt werden, gesteuert von einem Koeffizientenauswahlprogramm, das die Auswahl von Koeffizienten in aufeinanderfolgenden Taktzyklen unabhängig von jedem Multiplikanden steuert.

7. Vorrichtung zum Decodieren von Zeitmultiplex-Videosignalen, die eine Vielzahl digitaler Filter enthält, dadurch gekennzeichnet, daß jeder der genannten Filter einen digitalen Signalprozessor nach einem der Ansprüche 1 bis 6 enthält.

**Revendications**

1. Processeur numérique de signaux comprenant

   - un multiplieur pour produit scalaire (18, 48) pour la détermination d'une somme de produits d'une succession de multiplicandes par des coefficients respectifs,
   - une succession de sections de transfert (12), ayant chacune une sortie de transfert couplée à une des entrées de multiplicande successives du multiplieur pour produit scalaire, les sections de transfert ayant chacune une entrée de données (1a), des moyens de conservation de données (40, 42, 44, 46) et des moyens de couplage de transfert latéral (2a, 3a) à des sections de transfert adjacentes dans la succession, afin de transférer des données au cours de cycles d'horloge successifs,
   - des moyens de contrôle de transfert (16) pour contrôler dans au moins une des sections de transfert (12) un chemin de transfert par lequel les données sont transférées de l'entrée de données vers une des entrées de multiplicande correspondantes, caractérisé en ce que les moyens de contrôle de transfert (16) sont agencés de façon à être capables de modifier le chemin de transfert au cours desdits cycles d'horloge successifs sous le contrôle d'un programme, indépendamment pour chaque section de transfert (12), les sections de transfert (12) contenant un registre latéral (44) pour conserver les données à l'entrée de multiplicande pendant que les données d'initialisation pour une autre fonction de traitement sont transférées à travers la section de transfert (12).

2. Processeur numérique de signaux suivant la revendication 1, dans lequel chaque section de transfert (12) comprend un registre avant (40) pour la conservation de données couplé aux registres avant (40) de sections de transfert (12) adjacentes, formant une chaîne de transfert avant de données dans une direction avant le long de la succession de sections de transfert (12), ledit registre latéral (44) étant couplé entre la chaîne de transfert avant de données et la sortie de transfert, le transfert vers le registre avant (40) et le registre latéral (44) étant sous le contrôle des moyens de contrôle de transfert (16).

3. Processeur numérique de signaux suivant la revendication 2, chaque section de transfert (12) comprenant un registre arrière (46) couplé au registre arrière (46) de sections de transfert (12) adjacentes, formant une chaîne de transfert arrière de données dans une direction opposée à la chaîne de transfert avant de données, des données de la chaîne de transfert arrière de données étant fournies avec des données de la chaîne de transfert avant de données à un additionneur (47) dont la sortie est couplée à la sortie de transfert, le transfert vers le registre arrière (46) étant sous le contrôle des moyens de contrôle de transfert (16).

4. Processeur numérique de signaux suivant la revendication 3, caractérisé en ce que chaque section de transfert (12) comprend un couplage réciproque (42, 52) pour transférer des données de la chaîne de transfert avant de données vers la chaîne de transfert arrière de données, le transfert le long du couplage réciproque étant sous le contrôle des moyens de contrôle de transfert (16).

5. Processeur numérique de signaux suivant la revendication 4, caractérisé en ce que le couplage réciproque (42, 52) sous le contrôle des moyens de contrôle de transfert (16) part directement de la chaîne de transfert avant de données, ou passe via un registre central (42) dont le transfert est contrôlé par les moyens de contrôle de transfert (16).

6. Processeur numérique de signaux suivant l'une quelconque des revendications 1 à 5, caractérisé en ce que les coefficients respectifs servent d'entrées au multiplieur de produit scalaire depuis un dispositif de stockage de coefficients (54) sous le contrôle d'un programme de sélection de coefficients contrôlant la sélection des coefficients au cours de cycles d'horloge successifs, indépendamment pour chaque multiplicande.

7. Appareil pour décoder des signaux vidéo multiplexés dans le temps comprenant une pluralité de filtres numériques, caractérisé en ce que chacun desdits filtres comprend un processeur numérique de signaux suivant l'une quelconque des revendications 1 à 6.

FIG. 1

EP 0 417 861 B1

# FIG. 2

EP 0 417 861 B1

# FIG. 2 a

EP 0 417 861 B1

# FIG. 2b

EP 0 417 861 B1

FIG. 3

FIG. 4

FIG. 5b

FIG. 5a